# EUROPEAN PATENT SPECIFICATION

(11) **EP 2 320 199 B1**
(45) Date of publication and mention of the grant of the patent: **01.04.2020**
(21) Application number: 10188934.3
(22) Date of filing: 26.10.2010
(51) Int. Cl.: G01F 1/26, G01F 1/28, G01F 1/36, G01F 1/74

(54) **A method of detecting slugs of one phase in a multiphase flow**
Verfahren zur Erkennung von Schwallströmungen einer Phase in einem Mehrphasenfluss
Procédé de détection de bouchons d'une phase dans un flux à phases multiples

(30) Priority: 05.11.2009 GB 0919386
(43) Date of publication of application: 11.05.2011
(73) Proprietor: Spirax-Sarco Limited, Cheltenham, Gloucestershire GL53 8ER (GB)
(72) Inventor: Needham, Grant, Cheltenham, Gloucestershire GL51 9NQ (GB); Squires, Neil Lee, Cheltenham, Gloucestershire GL51 9NQ (GB); Maskrey, Adrian, Cheltenham, Gloucestershire GL51 9NQ (GB); Manley, Roger, Cheltenahm, Gloucestershire GL51 9NQ (GB)
(74) Representative: Haseltine Lake Kempner LLP

(56) References cited:
- EP-A1- 0 465 032
- EP-A1- 0 593 164
- WO-A1-97/45716
- US-A- 5 031 466
- US-A- 5 035 146
- US-A1- 2005 229 716

## Description

This invention relates to a method of detecting the presence of slugs of one phase in a conduit carrying a multiphase flow.

The use of steam as a heating medium in industrial processes is very widespread. Most process and heating steam systems use saturated steam which is a two phase fluid comprising vapour as the first phase and condensate as the second phase.

Loss of heat in a steam system causes the steam to condense into droplets. These droplets generally form along the inner surfaces of the pipes along which the steam flows. The droplets coalesce into a film of condensate along the inside of the pipe which is swept along by the flow. The film of condensate accumulates in wells or recesses in the pipe from where it is picked up by the flow as a slug of condensate and carried along the pipe. As the slugs travel along the pipe they collide with components such as valves, connectors and flow meters, disposed within the pipe causing what is commonly referred to as "water hammer" or "water impact". Steam systems are designed to accommodate saturated steam flow and are unsuitable for withstanding high energy impacts caused by slugs of condensate. The presence of slugs in a flow of saturated steam is therefore potentially damaging to components of the steam system and may lead to unexpected failure.

It is known to use various types of flow meters, including variable area flow meters, target flow meters and orifice type flow meters to monitor steam flow rate in steam systems. An example of a variable area flow meter is disclosed by EP0593164 in which a force exerted by a fluid on a plug in an orifice plate is detected and used to calculate the flow rate through the orifice plate. The flow meter generates an output signal which represents the flow rate.

It is known that for multiphase flow, small fluctuations in the flow create noise in the output signal. It is also known that the amount of noise in an output signal for a two phase flow such as saturated steam is related to the proportion of each phase constituting the flow.

US5031466 discloses a method of determining the steam quality, defined as the proportion of steam vapour in saturated steam, of a flow of saturated steam by measuring the degree of fluctuation over a specified period of time (≈ 30 seconds) of a differential pressure signal across an orifice plate through which the flow passes. The steam quality is inversely related to the degree of fluctuation in the differential pressure signal and can be determined using calibration tables compiled for a particular system in which the orifice plate is installed.

US20050229716 discloses a method in which characteristics of the signal noise are compared with tables which correlate the measured signal noise characteristics with flow rates of one or both of the phases present in a two-phase flow.

Each of these methods is concerned with measuring the amplitude or frequency of fluctuations in the output signal to determine the proportion of a particular phase in a multiphase flow. Slugs of flow create a sudden change of phase in the multiphase flow which is seen as a direct positive spike in the output signal. The methods defined in US20050229716 and US5031466 are thus unsuitable for detecting slugs of flow in a multiphase flow since the spike in the output signal is either filtered from the signal or incorporated as one of many fluctuations. A consequence of this is that potentially damaging slugs of flow go undetected.

WO 97/457716 discloses a method of identifying a predetermined multiphase flow anomaly, such as a plug, slug or pseudo slug, in a pipeline by measuring first and second differential pressures at respective measuring points, identifying primary and secondary pressure drops at the respective measuring points, measuring a time delay between the initiation of the primary pressure drop and initiation of the secondary pressure drop and determining as a function of the time delay whether the primary pressure drop corresponds to a predetermined multiphase flow anomaly.

According to the present invention there is provided a method of detecting the presence of a slug of one phase in a conduit carrying a multiphase flow comprising: using a flow meter to provide an output signal representing mass flow rate of the multiphase flow; determining the rate of change of the output signal; and generating an alert in response to a predetermined profile of the output signal, when the profile includes a rate of change of the output signal falling outside a predetermined range.

A slug is a discrete quantity of heavier or lighter phase fluid entrained in the flow of multiphase flow.

The profile comprises a pulse, in which the rising portion of the pulse has a rate of increase exceeding a predetermined value. A profile comprising a pulse a rate of increase greater than a predetermined value improves detection of slugs and reduces the possibility of falsely detecting a slug in the flow.

The falling portion of the pulse has a rate of decrease exceeding a predetermined value. This provides further certainty that the rate of increase first detected is caused by a slug.

The falling portion of the pulse may extend below a value of the output signal representing the mean flow rate before the pulse.

The flow meter may be any kind of flow meter which provides an output signal that can be analysed to determine its rate of change. Suitable flow meters are variable area flow meters such as that disclosed in EP 0593164, and target flow meters wherein the output signal may represent the displacement of, or a reaction force, exerted by a component of the flow meter.

The flow meter may be an orifice type flow meter, the output signal representing the pressure difference across the orifice.

The multiphase flow may be saturated steam. The multiphase flow may comprise any fluid which is entrained by a gas, such as water entrained by air.

According to another aspect of the invention there is provided a system comprising a flow meter, having processing means for processing the output signal of the flow meter so as to carry out the method as defined above.

For a better understanding of the present invention and to show more clearly how it may be carried into effect, reference will now be made, by way of example, to the accompanying drawings in which:
Figure 1 shows a variable area flow meter;
Figure 2 is a schematic representation of a slug of flow in a conduit;
Figure 3 shows an output signal profile; and
Figure 4 shows a target flow meter.

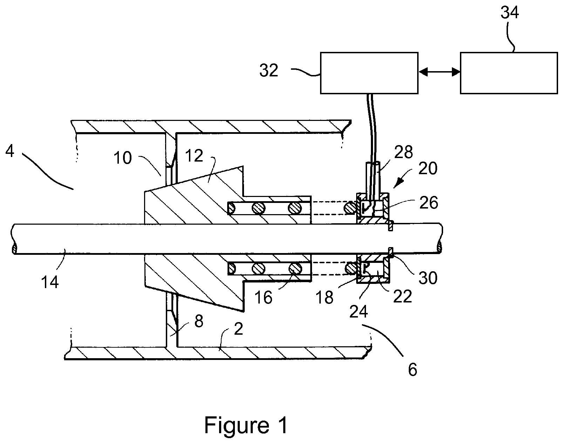

The variable area flow meter shown in Figure 1 comprises a conduit 2 having an inlet 4 and an outlet 6. An orifice plate 8 is secured within the conduit 2 and has an opening 10. An axially slidable cone shaped plug 12 provides a variable restriction to the size of the opening 10. The plug 12 is slidable along a shaft 14 which is secured to a supporting member (not shown) situated within the conduit 2.

A spring 16 extends axially within the conduit 2 between the plug 2 and a pressure plate 18. The flow measurement system shown in Figure 1 comprises a capsule 20 which is disposed around the shaft 14. The capsule 20 is configured as a toroid, for example comprising a cylindrical annulus. The capsule 20 is thus an enclosed body, having an internal volume 22. One face of the capsule, which acts as the pressure plate 18, provides an abutment for the spring 16 and consists of a diaphragm. A number of high temperature strain gauges 24 are provided, attached to the side of the diaphragm 18 opposite to the spring 16. There may, for example, be four compensated gauges 24. The capsule 20 is filled with a medium such that the gauges 24 may remain serviceable at high temperatures. This medium may for example be an inert gas, a vacuum, air or a plastics material.

Wires 26 extend from the gauges 24 and are fed, via a metal tube 28, to the exterior of the conduit 2. The wires 26 are sealed within the tube 28 to prevent leakage of the medium within the capsule 20. The wires 26 connect the strain gauges with a signal processor 32 which, in turn, is in communication with a memory 34. The position of the capsule 20 may be selected by means of a stop 30 which provides an abutment against which the capsule 20 is pressed by the action of the spring 16.

The cone shaped plug 12 preferably has a particular configuration which is designed such that there is a linear relationship between the flow rate within the conduit 2 and the strain measurements, which simplifies calibration of the device.

In use, fluid enters the inlet 4 of the pipe 2 and flows freely within the pipe to the orifice plate 8. A variable opening is provided between the external surface of the cone shaped plug 12 and the opening 10 in the orifice plate 8. Depending upon the rate of flow of fluid within the pipe, a force will be exerted on the plug 12 by the fluid at the inlet side of the pipe. This force causes the plug 12 to slide axially along the shaft 14 to increase the size of the variable opening. Movement of the plug 12 is resisted by the spring 16, and the spring 16, in turn, exerts a force on the diaphragm 18 causing the diaphragm 18 to deflect. The capsule 20 remains stationary during operation of the system. Deflection of the diaphragm 18 is detected by the strain gauges 24 which provide a strain output signal according to the load applied to them. These signals pass via the wires 26 through the tube 28 to the signal processor 32. The signal processor 32 communicates with the memory 34 for storing data outputted by the signal processor 32. The strain signals obtained can be directly related to the flow rate within the conduit 2. For steady flow, the plug 12 will reach an equilibrium position, for which a certain force is exerted on the pressure plate 18. In operation, the output signal generated during normal flow of saturated steam is approximately constant, or will vary gradually in response to changes in the operating conditions. However, small fluctuations in the flow rate create noise in the output signal. The noise is filtered from the output signal to leave an output signal which represents the mean flow rate.

The method of detecting the presence of a slug of condensate in the flow involves using the signal processor to compare the output signal against a predetermined profile of the output signal stored in the memory 34. The predetermined profile is a pulsed profile comprising a rising portion having a rate of increase which is greater than a predetermined value and a falling portion having a rate of decrease greater than a predetermined value. The falling portion of the pulse extends below a value which corresponds to the mean flow rate before the pulse.

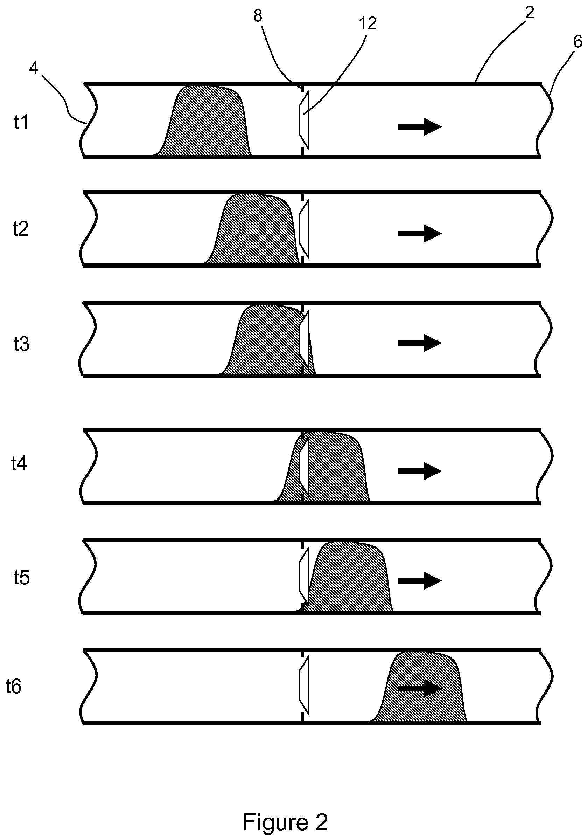

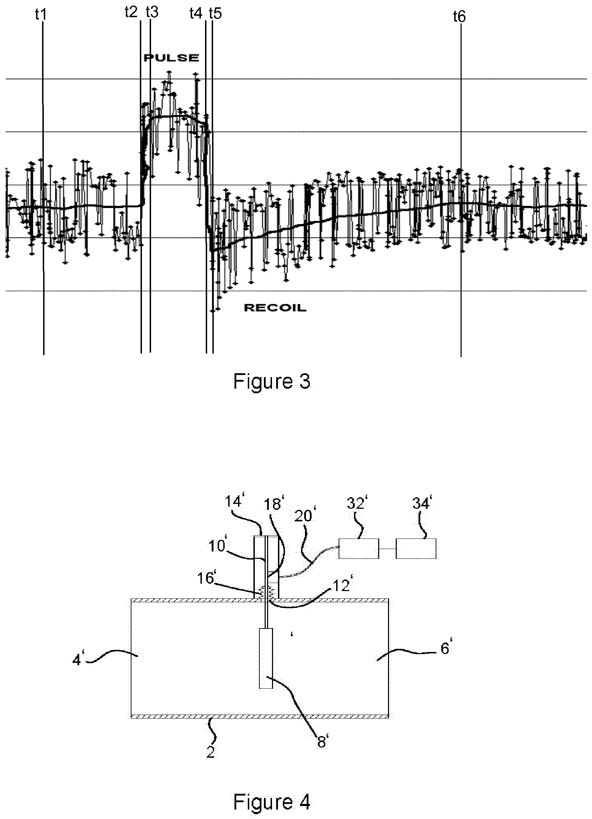

The method of comparing the output signal with the predetermined profile in order to determine the presence of a slug may be explained with reference to Figures 2 and 3.

Figure 2 shows the position of a slugs in the pipe 2 with respect to the orifice plate 8 at successive time intervals t1 to t6.

Figure 3 shows the unfiltered output signal generated by the flow meter when the slug passes through the orifice plate 8, as shown in Figure 2. The filtered output signal representing the mean flow rate is also shown. The lines indicated by references t1 to t6 in Figure 3 correspond to the time intervals t1 to t6 shown in Figure 2.

Between t1 and t2 the output signal is approximately constant and represents the mean flow rate of the flow under normal operating conditions. The signal processor 32 stores the value of the mean flow rate at t1 in the memory 34 for later comparison.

Between t2 and t3 the output signal increases rapidly in response to the arrival of the front of slugs at the plug 12. The signal processor compares the rate of increase in the output signal with the predetermined level stored in the memory 34. The predetermined level corresponds to that which would be expected to occur when a slug of higher phase flow passes over the plug 12 and would typically be greater than that which could be expected to be generated by saturated steam during normal operation. The predetermined level may be determined empirically or theoretically. If the rate of increase of the output signal exceeds the predetermined level, the signal processor generates an alarm or else logs a positive detection of a slug in the system memory 34. The alarm indication can be by way of a local warning display at the flow meters, such as warning light or sounder, alarm terminals or a signal to system management software via a communication port.

The output signal remains approximately constant between t3 and t4 as the slugs passes through the orifice plate 8 and around the plug 12. During this period, the heavier phase slugs exerts a larger force on the plug 12 than would be exerted by saturated steam during normal operating conditions, owing to the greater density of the water forming the slug, compared to that of vapour. Consequently, the mass flow rate is significantly greater than the mean mass flow rate upstream or downstream of the slugs. The duration of time between t3 to t4 corresponds to the size of the slugs and its velocity along the pipe. The time lag between the increase and decrease in the amplitude of the signal may therefore be used to determine the size of the slugs.

Between t4 and t5 the output signal decreases rapidly. The rapid decrease in the output signal corresponds to the slug completing its passage through the orifice plate 8 and the flow over the plug 12 returning to normal flow of saturated steam. The signal processor 32 compares the rate of decrease of the output signal against the predetermined rate of decrease of the output signal stored in the memory 34. The predetermined rate of decrease corresponds to that which would be expected to be produced as a slug passes over the plug 12. The predetermined rate of decrease may be obtained empirically or theoretically. If the actual rate of decrease exceeds the predetermined level then the signal processor 32 confirms the positive detection of the slugs logged in the memory 34.

The rapid decrease in the output signal caused by the passage of the slug is followed by a continued decrease in the output signal below a level which represents the mean flow rate before the arrival of the slugs. This further decrease is a result of a recoil action following the rapid decrease in the flow rate, caused by the plug 12 rebounding past the mean mass flow rate position following passage of a slug.

The signal processor 32 compares the flow rate at time t5, when the flow rate is at a minimum, with the mean flow rate before the passage of the slug stored in the memory 34. If the output signal drops below the mean flow rate by a predetermined amount, then the signal processor 32 provides further confirmation of positive detection of a slug. The predetermined amount is that which would ordinarily be generated in the wake of a slug and may be obtained empirically or theoretically.

The decrease in the output signal is followed by a steady increase between t5 and t6 in which the output signal returns to a level representative of the mean flow rate.

It will be appreciated that the profile of the output signal, i.e. rapid increases followed by rapid reduction to a recoil level below the mean signal level can be compared in its entirety with a predetermined profile to detect the presence of a slug. Alternatively, individual features of the profile can be compared.

Although the presence has been described with reference to a flow of saturated steam, it will be appreciated that it can also be applied to other fluids, for example to detect the presence of slugs of air or other gas in liquid flows, such as water.

The presence of slugs of water in a steam system is a symptom of problems within the system. Consequently, the ability to detect the presence of such slugs can serve as an alert to the system operator that the system requires investigation. Also, the ability to detect the presence of slugs of water at an early stage enables remedial action to be taken to avoid damage to components and processes of the system.

Figure 4 shows a target flow meter which may be used to perform the method described above. The flow meter shown in Figure 4 comprises a conduit 2' having an inlet 4' and an outlet 6'. A target 8' is suspended within the conduit 2' on a rod 10'. The rod 10' extends through an aperture 12' provided in a wall of the conduit 2'. The diameter of the aperture 12' is greater than the diameter of the rod 10'. The end of the rod 10' which projects from the conduit 2' is supported by a housing 14'. A sealing member 16', which may be a bellows, diaphragm, thin walled tube or elastomeric seal, surrounds the portion of the rod 10' adjacent the wall of the conduit 2' thereby preventing flow through the aperture 12' into the housing 14'. Strain gauges 18' are affixed to the portion of the rod 10' within the housing 14'. Wires 20' connect the strain gauges 18' with a signal processor 32' which, in turn, is in communication with a memory 34'.

In use, fluid enters the inlet 4' of the conduit 2' and flows along the conduit 2' towards the outlet 6'. As the fluid washes over the target 8' it exerts a force on the target 8' which deflects the rod 10'. The amount of deflection of the rod 10' is proportional to the force exerted on the target 8', and hence the flow rate through the conduit 2'. The deflection of the rod 10' is detected by the strain gauges 18' which provide a strain output signal proportional to the strain. This signal is passed via the wires 20' to the signal processor 32'. The signal processor 32' communicates with a memory 34' for storing the signal outputted by the signal processor 32'. The strain signals obtained can be directly related to the flow rate within the conduit 2'. The method of detecting the presence of a slug of condensate in the flow involves using the signal processor 32' to compare the output signal from the signal processor 32' against a predetermined profile of the output signal as described above in relation to the variable area flow meter.

## Claims

1. A method of detecting the presence of a slug of one phase in a conduit (2, 2') carrying a multiphase flow **characterised in that** the method comprises:
using a flow meter to provide an output signal representing mass flow rate of the multiphase flow;
determining the rate of change of the output signal; and
generating an alert in response to comparing the output signal against a predetermined profile of the output signal comprising a pulse having a rising portion (t2-t3) having a rate of increase of a first predetermined value; and a falling portion (t4-t5) having a rate of decrease of a second predetermined value;
wherein the alert is generated in response to determining that a rate of increase of the output signal exceeds the first predetermined level, or in response to determining that a rate of decrease of the output signal exceeds the second predetermined value.

2. A method according to claim 1, in which the falling portion (t4-t5) of the pulse extends below a value of the output signal representing the mean flow rate before the pulse.

3. A method according to any one of the preceding claims, in which the flow meter is a variable area flow meter.

4. A method according to any one of the preceding claims, in which the flow meter is a target flow meter.

5. A method according to claim 3 or 4, in which the output signal represents the displacement of, or a reaction force exerted by, a component of the flow meter.

6. A method according to any one of the preceding claims, in which the flow meter is an orifice type flow meter, the output signal representing the pressure difference across the orifice (10).

7. A method according to any one of the preceding claims, wherein the multiphase flow is saturated steam and the slug comprises water.

8. A system comprising a flow meter, **characterised in that** the system has processing means (32, 32') for processing the output signal of the flow meter so as to carry out the method according to any one of the preceding claims.

## Patentansprüche

1. Verfahren zur Erkennung der Präsenz einer Schwallströmung einer Phase in einer Leitung (2, 2'), die einen Mehrphasenfluss transportiert, **dadurch gekennzeichnet, dass** das Verfahren Folgendes umfasst:
Verwenden eines Durchflussmessers zum Bereitstellen eines Ausgangssignals, das eine Massenflussrate des Mehrphasenflusses repräsentiert;
Bestimmen der Änderungsrate des Ausgangssignals; und
Erzeugen einer Warnung in Reaktion auf ein Vergleichen des Ausgangssignals mit einem vorbestimmten Profil des Ausgangssignals, umfassend einen Impuls mit einem ansteigenden Abschnitt (t2-t3), der eine Anstiegsrate eines ersten vorbestimmten Werts aufweist; und einem fallenden Abschnitt (t4-t5), der eine Verringerungsrate eines zweiten vorbestimmten Werts aufweist;
wobei die Warnung in Reaktion darauf erzeugt wird, dass festgestellt wird, dass eine Anstiegsrate des Ausgangssignals das erste vorbestimmte Niveau überschreitet, oder in Reaktion darauf, dass festgestellt wird, dass eine Verringerungsrate des Ausgangssignals den zweiten vorbestimmten Wert überschreitet.

2. Verfahren nach Anspruch 1, in dem sich der fallende Abschnitt (t4-t5) des Impulses unter einen Wert des Ausgangssignals erstreckt, repräsentierend die mittlere Flussrate vor dem Impuls.

3. Verfahren nach einem der vorangehenden Ansprüche, in dem der Durchflussmesser ein Durchflussmesser mit variablem Bereich ist.

4. Verfahren nach einem der vorangehenden Ansprüche, in dem der Durchflussmesser ein Zieldurchflussmesser ist.

5. Verfahren nach Anspruch 3 oder 4, in dem das Ausgangssignal die Versetzung von einer Komponente des Durchflussmessers oder eine von ihr ausgeübte Reaktionskraft repräsentiert.

6. Verfahren nach einem der vorangehenden Ansprüche, in dem der Durchflussmesser ein Durchflussmesser des Typs mit Öffnung ist, wobei das Ausgangssignal die Druckdifferenz entlang der Öffnung (10) repräsentiert.

7. Verfahren nach einem der vorangehenden Ansprüche, wobei der Mehrphasenfluss gesättigter Dampf ist und die Schwallströmung Wasser umfasst.

8. System, umfassend einen Durchflussmesser, **dadurch gekennzeichnet, dass** das System Verarbeitungsmittel (32, 32') zum Verarbeiten des Ausgangssignals des Durchflussmessers aufweist, um das Verfahren nach einem der vorangehenden Ansprüche auszuführen.

## Revendications

1. Procédé de détection de la présence d'un bouchon d'une phase dans une conduite (2, 2') transportant un écoulement polyphasique, **caractérisé en ce que** le procédé comprend :
l'utilisation d'un débitmètre pour obtenir un signal de sortie représentant le débit massique de l'écoulement polyphasique ;
la détermination de la vitesse de variation du signal de sortie ; et
la génération d'une alerte en réponse à la comparaison du signal de sortie avec un profil prédéterminé du signal de sortie comprenant une impulsion ayant une partie montante (t2-t3) ayant une vitesse d'augmentation d'une première valeur prédéterminée, et une partie descendante (t4-t5) ayant une vitesse de diminution d'une deuxième valeur prédéterminée ;
dans lequel l'alerte est générée en réponse à la détermination qu'une vitesse d'augmentation du signal de sortie dépasse le premier niveau prédéterminé, ou en réponse à la détermination qu'une vitesse de diminution du signal de sortie dépasse la deuxième valeur prédéterminée.

2. Procédé selon la revendication 1, dans lequel la partie descendante (t4-t5) de l'impulsion se prolonge au-dessous d'une valeur du signal de sortie représentant le débit moyen avant l'impulsion.

3. Procédé selon l'une quelconque des revendications précédentes, dans lequel le débitmètre est un débitmètre à surface variable.

4. Procédé selon l'une quelconque des revendications précédentes, dans lequel le débitmètre est un débitmètre à cible.

5. Procédé selon la revendication 3 ou 4, dans lequel le signal de sortie représente le déplacement de, ou une force de réaction exercée par, un composant du débitmètre.

6. Procédé selon l'une quelconque des revendications précédentes, dans lequel le débitmètre est un débitmètre de type à orifice, le signal de sortie représentant la différence de pression à travers l'orifice (10).

7. Procédé selon l'une quelconque des revendications précédentes, dans lequel l'écoulement polyphasique est de la vapeur d'eau saturée et le bouchon comprend de l'eau.

8. Système comprenant un débitmètre, **caractérisé en ce que** le système a des moyens de traitement (32, 32') pour traiter le signal de sortie du débitmètre de manière à réaliser le procédé selon l'une quelconque des revendications précédentes.
